# EUROPEAN PATENT SPECIFICATION

(11) **EP 4 446 171 B1**
(45) Date of publication and mention of the grant of the patent: **12.11.2025**
(21) Application number: 24170042.6
(22) Date of filing: 12.04.2024
(51) Int. Cl.: B60R 19/00, B60R 19/42, A63G 25/00

(54) **IMPROVED GO-KART WITH PROTECTION ASSEMBLY**
VERBESSERTES GO-KART MIT SCHUTZANORDNUNG
KART AMÉLIORÉ AVEC ENSEMBLE DE PROTECTION

(30) Priority: 13.04.2023 IT 202300007146
(43) Date of publication of application: 16.10.2024
(73) Proprietor: Innovative Products for Karting S.r.l., 37056 Salizzole (VR) (IT)
(72) Inventor: Sliva, Daniel, 37014 Castelnuovo del Garda (Verona) (IT)
(74) Representative: Manfrin, Marta

(56) References cited:
- EP-A1- 2 808 205
- DE-U1- 202018 100 973
- US-A- 1 543 462
- US-A- 5 806 901
- US-A1- 2020 017 045

## Description

The present disclosure relates generally to an improved go-kart. In particular, the present disclosure concerns an improved go-kart comprising a protection assembly. Documents EP2808205 A1 and US5806901 A disclose go-karts having shock absorbers between chassis surrounding bumper elements and the chassis.

In the go-kart sector, the safety of the driver and the vehicle requires the use of protection means, in particular to at least partially absorb the energy of any collision or impact while driving the go-kart.

Generally, in karts according to the prior art, the use of rigid structures that favour the absorption of vibrations is envisaged. For example, the use of "silent blocks" is known, i.e. anti-vibration bushings capable of absorbing part of the vibrations generated while driving the kart.

At the basis of the present disclosure there is a recognition by the inventor of the present disclosure that karts such as those made available so far by the prior art, although advantageous from many points of view, involve a transfer of the energy of collisions and impacts to the frame of the kart.

This poses a risk to the safety of the driver and the vehicle since the energy of the impacts is transmitted to the driver's body and to the kart frame, causing injuries and/or damage, respectively.

Specifically, known devices only allow to absorb vibrations while driving the kart but allow the transmission of impact energy to the frame.

In addition, a further recognition by the inventor of the present disclosure consists in the fact that the karts according to the known art generally have a heavy structure to favour the absorption of vibrations. This leads to high consumption of fuel and of the tires of the kart due to the high weight.

The present disclosure starts from the position of the technical problem of providing a kart that allows to meet the above-mentioned needs with reference to the known art and/or to achieve further advantages.

This is achieved by a go-kart comprising a protection assembly and an impact protection method for a go-kart according to the respective independent claims. Secondary features of the subject matter of the present disclosure are defined in the corresponding dependent claims.

In particular, in accordance with the present disclosure, in order to improve the kart according to the prior art, it is proposed to improve the protection assembly against shocks and impacts.

For this purpose, it is proposed to create a go-kart as defined by claim 1 comprising a frame having an external impact surface, suitable for facing an impact. The go-kart also includes a protection assembly to protect the frame, wherein the protection assembly includes:
- a plurality of ring bodies arranged along the external surface of the frame;
- a containment structure that surrounds the external surface of the frame and contains the plurality of ring bodies. In particular, the containment structure is associated with each of the plurality of ring bodies in a tangential manner.

Furthermore, the protection assembly further includes fastening means for fastening each of the plurality of ring bodies to the containment structure and for fastening each of the plurality of ring bodies to the frame.

Furthermore, each of the plurality of ring bodies is arranged between the external surface and the containment structure. In particular, each of the plurality of ring bodies is configured to be subjected to a deformation in the event of an impact.

Furthermore, the frame has a front zone, a rear zone and two side zones, the ring bodies are arranged along the front zone and/or along the rear zone of the frame and/or along at least one of the side zones. Furthermore, the containment structure is a continuous body that wraps the frame along the front zone, the rear zone and the two side zones. This means that the containment structure presents structural continuity, i.e. it develops along a continuous line without corners or edges, both in the case that it is made up of a single piece and in the case that it is made up of several parts connected to each other. In other words, the containment structure forms a continuous and unfragmented line, even if made up of one or more parts connected to each other. For example, the containment structure can be a closed line or substantially oval.

Furthermore, according to the present disclosure it is made available a method of impact protection for a go-kart as defined by claim 11 comprising a frame having an external impact surface adapted to face an impact. The method involves the following phases:
- providing a protection assembly configured to protect the frame, wherein the protection assembly includes a plurality of ring bodies, arranged along the external surface of the frame, and a containment structure, which surrounds the external surface, wherein each of the plurality of ring bodies is arranged between the external surface and the containment structure;
- a temporary deformation of each of the plurality of ring bodies in the event of an impact, in such a way as to at least partially absorb an impact energy;
- a springback of each of the plurality of ring bodies at the end of the impact.

In particular, according to the method the containment structure is a continuous body that wraps the frame and is associated with each of the plurality of ring bodies in a tangential manner.

Further advantages, characteristics and methods of use of the subject matter of the present disclosure will be evident from the following detailed description of its embodiments, presented for illustrative and non-limiting purposes.

It is however clear that each embodiment of the subject matter of the present disclosure can present one or more of the advantages listed above; in any case it is not required that each embodiment simultaneously presents all the advantages listed.

Reference will be made to the figures in the attached drawings, wherein:
- Figure 1 shows a schematic top view of a go-kart according to a first embodiment of the present invention;
- Figure 2 shows a schematic top view of a go-kart according to an alternative embodiment of the present invention;

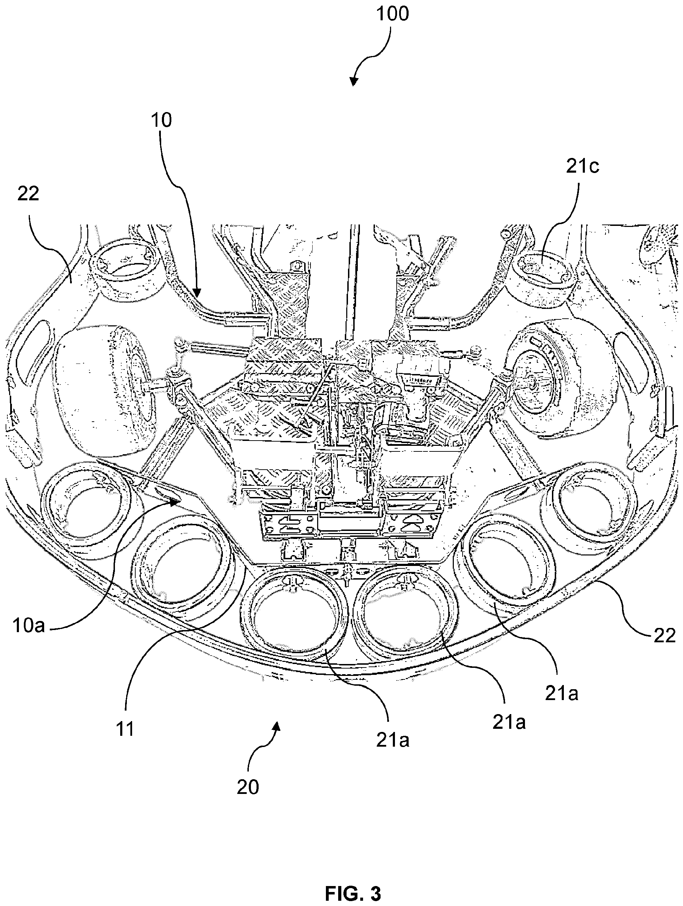

- Figure 3 shows a top view of a front area of a go-kart according to the embodiment of Figure 1.

With reference to the attached figures, an embodiment of a go-kart according to the present invention is indicated overall with the reference number 100.

The go-kart comprises a frame 10 having an external impact surface 11, i.e. capable of facing an impact or a collision, and a protection assembly 20 to protect the frame 10. In particular, the protection assembly comprises:
- a plurality of ring bodies 21a, 21b, 21c arranged along the external surface 11 of the frame 10;
- a containment structure 22 which surrounds the external surface 11 of the frame 10 and contains each of the plurality of ring bodies 21a, 21b, 21c, where each of the plurality of ring bodies 21a, 21b, 21c is arranged between the external surface 11 and containment structure 20.

Furthermore, the protection assembly 20 further includes fastening means for fastening each of the plurality of ring bodies 21a, 21b, 21c to the containment structure 22 and for fastening each of the plurality of ring bodies 21a, 21b, 21c to the frame 10. This means that the fastening means are configured to connect in a fixed or rigid manner each of the plurality of ring bodies 21a, 21b, 21c both to the containment structure 22 and to the frame 10, for example by tightening preferably by means of a bolt.

In particular, each of the plurality of ring bodies 21a, 21b, 21c is configured to be subjected to a deformation in the event of an impact.

In other words, each of the plurality of ring bodies 21a, 21b, 21c is positioned along the external surface 11 of the frame 10 and is at least partially wrapped or contained by the containment structure 22, for example along a region opposite the external surface 11.

Preferably, each of the plurality of ring bodies 21a, 21b, 21c is configured to be able to assume a rest condition and a deformed condition. In particular, in the event of an impact each of the plurality of ring bodies 21a, 21b, 21c is preferably configured to be subjected to a temporary deformation and assume said deformed condition. Furthermore, preferably each of the plurality of ring bodies 21a, 21b, 21c is configured to assume the initial or rest condition in a condition of absence of impact or shock. That is to say, in the event of a collision or impact during use of the go-kart, preferably each of the plurality of ring bodies 21a, 21b, 21c is configured to move from the rest condition to the deformed condition, and preferably is further configured to return to the rest condition at the end of the collision or impact.

In this way, through elastic deformation each of the plurality of ring bodies 21a, 21b, 21c can at least partially absorb an impact energy due to an impact of the go-kart.

According to one embodiment, each of the plurality of ring bodies 21a, 21b, 21c is shaped like a hollow cylinder or tubular body comprising two hollow base surfaces and a lateral surface. In particular, preferably each of the plurality of ring bodies 21a, 21b, 21c is associated with the frame 10, along the external surface 11, and with the containment structure 22 along the lateral surface of the hollow cylinder or tubular body.

Preferably therefore each of the plurality of ring bodies 21a, 21b, 21c is configured to deform in the event of impacts mainly along at least one direction perpendicular to an axis of the hollow cylinder or tubular body. That is to say that in the event of an impact along a direction parallel to the axis of the hollow cylinder or tubular body the deformation of each of the plurality of ring bodies 21a, 21b, 21c is preferably zero or negligible.

In other words, in the event of impact preferably the deformation of each of the plurality of ring bodies 21a, 21b, 21c involves a change in the shape and/or area of the hollow base surfaces of the hollow cylinder or tubular body. Preferably, moreover, in the event of an impact the deformation of each of the plurality of ring bodies 21a, 21b, 21c involves a zero or negligible variation in the height of the hollow cylinder or tubular body.

According to the invention, the protection assembly 20 includes a plurality of ring bodies 21a, 21b and the containment structure 22 is associated with each of the plurality of ring bodies 21a, 21b in a tangent manner.

That is to say that preferably the containment structure 22 touches in a tangent manner each of the ring bodies of the plurality of ring bodies 21a, 21b.

According to the invention, the frame 10 has a front zone 10a, a rear zone 10b and two side zones 10c. Furthermore, each of the plurality of ring bodies 21a, 21b, 21c is arranged along the front zone 10a and/or along the rear zone 10b of the frame 10 and/or in at least one of the two side zones 10c. This means that the plurality of ring bodies 21a, 21b, 21c are preferably positioned along the external surface 11 of the frame 10 in correspondence of or close to the front zone 10a, and/or in correspondence of or close to the rear zone 10b of the frame 10, and/or in correspondence of or close to one or both side zones (10c).

In other words, preferably each of the plurality of ring bodies 21a, 21b, 21c can be positioned in correspondence with or close to one or more of the zones of the frame 10, i.e. the front zone 10a, the rear zone 10b and the side zones 10c. It is clear that a plurality of ring bodies 21a, 21b, 21c are preferably provided in such a way as to at least partially occupy each of the zones of the frame 10 provided with at least one ring body 21a, 21b, 21c. It is clear that the front zone 10a and the rear zone 10b are the zones most frequently subject to impacts, so it is advantageous to position the ring bodies 21a, 21b along at least one of the two, but it is possible to position the ring bodies 21a, 21b also along the side zones 10c of the frame 10.

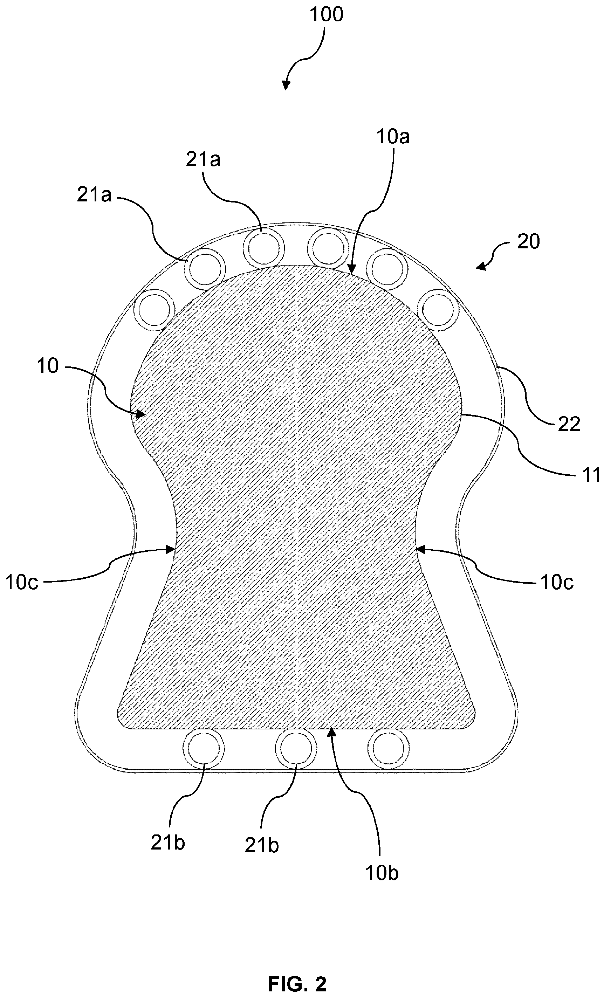

Advantageously and preferably, the protection assembly 20 includes five ring bodies 21a arranged along the front zone 10a of the frame 10 and three ring bodies 21b arranged along the rear zone 10b of the frame 10, as shown in Figure 2.

Even more preferably, the protection assembly 20 further comprises a ring body 21c arranged along one of the side zones 10c of the frame 10 and a ring body 21c arranged along the other of the side zones 10c of the frame 10.

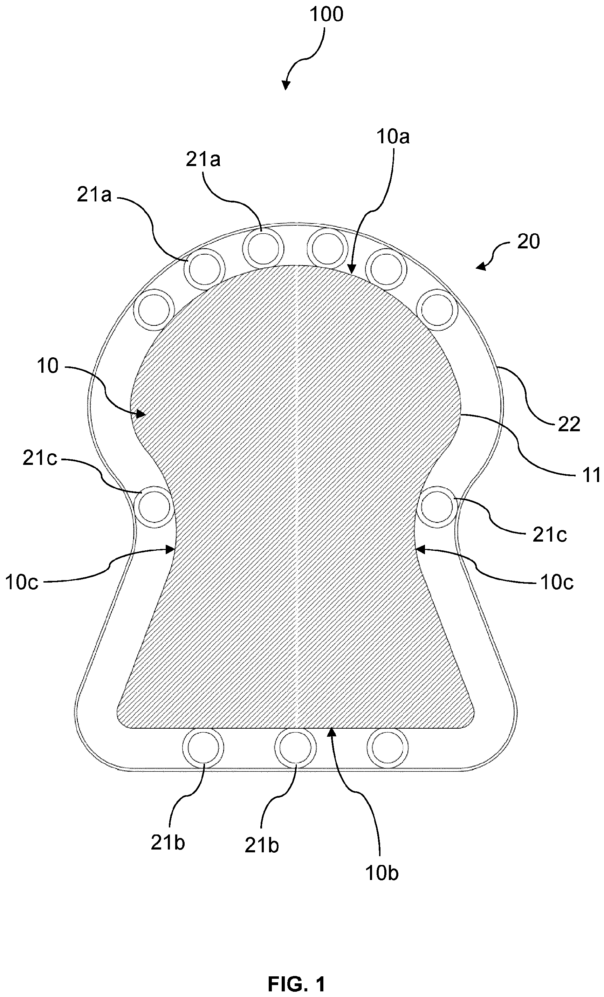

Therefore, according to a preferred embodiment shown in Figure 1, the gokart according to the present invention can present five ring bodies 21a along the front zone 10a, three ring bodies 21b along the rear zone 21b and one ring body 21c along each of the two side zones 10c.

It is clear that it is also possible to distribute along the frame 10 a greater or lower number of ring bodies 21a, 21b, 21c along each of the front, rear and/or side zones compared to the embodiments described, so as to obtain different configurations but in any case falling within the scope of protection of the present invention.

According to the invention, the containment structure 22 is a continuous body that wraps the frame 10 along the front zone 10a, the rear zone 10b and the two side zones 10c. That is to say that the containment structure 22 preferably wraps the entire frame 10 along the external surface 11 and contains at least one ring body 21a, 21b close to the external surface 11.

This means that the containment structure 22 is a continuous body in the sense that it presents structural continuity and that it can be formed by one or more parts connected to each other.

Preferably, the containment structure 22 is a continuous structure without hinges. That is to say, the containment structure 22 forms a structure that preferably acts as a rigid body.

This configuration allows the energy of an impact to be dissipated through one or more ring bodies 21a, 21b, 21c closest to the point of impact. In fact, by means of the present invention the one or more ring bodies 21a, 21b, 21c arranged along the zone or zones subjected to impact are deformed during the impact, while any one or more additional ring bodies 21a, 21b, 21c arranged along the zone or zones not subjected to impact remain in the rest condition during the impact, or are deformed to a lesser extent than the previous ones. This configuration therefore allows maximizing the dissipation of impact energy by each ring body 21a, 21b, 21c while at the same time allowing the kart to be protected from impacts along the entire external surface 11 of the frame 10.

This means that the containment structure 22 which envelops the entire frame 10 allows the energy of an impact to be transferred towards one or more ring bodies 21a, 21b closest to the point of impact, which can consequently dissipate the energy of an impact passing from the rest condition to the deformed condition, while any one or more additional ring bodies 21a, 21b distal from the impact point preferably remain in the rest condition during the impact.

For example, this configuration allows the energy of two or more simultaneous impacts in different areas of the kart to be effectively absorbed. This means that for example it is possible to dissipate the energy of a first impact through the deformation of a ring body 21a, 21b and it is further possible to dissipate the energy of a second impact, simultaneous with the first impact but in a different zone with respect to the first impact, through the deformation of a second ring body 21a, 21b which is in the rest condition during the first impact.

Preferably, each of the plurality of ring bodies 21a, 21b, 21c is made of elastic material. For example, the at least one ring body 21a, 21b, 21c is made of rubber or a polymeric material with excellent shock absorption and elastic deformation capabilities.

Even more preferably, the containment structure 22 is also made of elastic material, for example the same material as the ring bodies 21a, 21b, 21c.

Preferably, the ring bodies 21a, 21b, 21c are the only connection between the containment structure 22 and the frame 10. That is to say that preferably only the ring bodies 21a, 21b, 21c and the fastening means are present between the containment structure 22 and the frame 10.

Preferably, the external diameter of each of the plurality of ring bodies 21a, 21b, 21c corresponds to or is equal to the distance between the containment structure 22 and the frame 10 in correspondence of each of the plurality of ring bodies 21a, 21b, 21c. In other words, each of the plurality of ring bodies 21a, 21b, 21c has an external diameter that coincides with the distance between the containment structure 22 and the frame 10 in the zone in which the respective ring of the plurality of ring bodies 21a, 21b, 21c is positioned.

The present invention further relates to a method of impact protection for a go-kart 100 comprising a frame 10 having an external impact surface 11 suitable for facing an impact. The method involves the following phases:
- providing a protection assembly 20 configured to protect the frame 10, where the protection assembly 20 includes at least a ring body 21a, 21b, arranged along the external surface 11 of the frame 10, and a containment structure 22, which surrounds the external surface 11, where in particular the at least one ring body 21a, 21b is arranged between the external surface 11 and the containment structure 20;
- a temporary deformation of the at least one ring body 21a, 21b in the event of an impact, in such a way as to at least partially absorb an impact energy;
- a springback of the at least one ring body 21a, 21b at the end of the impact.

Preferably, the at least one ring body 21a, 21b is configured to be able to assume a rest condition and a deformed condition. In particular, preferably during the temporary deformation the at least one ring body 21a, 21b assumes the deformed condition and furthermore both before the temporary deformation and following the springback phase, the at least one ring body 21a, 21b assumes the rest condition.

This means that preferably in the absence of impacts or collisions the at least one ring body 21a, 21b is in the rest condition and in the event of an impact or collision the at least one ring body 21a, 21b can assume the deformed condition to carry out the temporary deformation phase and absorb at least partially the collision or impact energy.

Furthermore, according to the invention, the protection assembly 22 includes a plurality of ring bodies 21a, 21b. Furthermore, the containment structure 22 is a continuous body that envelops the frame 10 and is associated with each of the plurality of ring bodies 21a, 21b in a tangential manner. This means that the containment structure 22 touches in a tangential manner each of the ring bodies of the plurality of ring bodies 21a, 21b.

Preferably only the ring bodies arranged along the zone or zones subjected to impact are deformed during the impact, while preferably the ring bodies arranged along the zone or zones not subjected to impact remain in the rest condition during the impact, or they are deformed to a lesser extent than the previous ones.

It is therefore clear that a go-kart including the protection assembly described, as well as the impact protection method for a go-kart, allow the limits of the known art to be overcome in relation to the safety of the driver and to that of the vehicle.

In particular, through a temporary deformation of the at least one ring body 21a, 21b the protection assembly can at least partially absorb the energy of an impact or collision, thus guaranteeing an improved protection for the driver and the vehicle.

The object of the present disclosure has so far been described with reference to its embodiments. It is to be understood that there may be other embodiments that relate to the same inventive core, all falling within the scope of protection of the claims set out below.

## Claims

1. Go-kart (100) comprising a frame (10) having an external impact surface (11) adapted to face an impact and a protection assembly (20) for protecting said frame (10), wherein the protection assembly comprises:
- a plurality of ring bodies (21a, 21b, 21c) (21a, 21b, 21c) arranged along the external surface (11) of said frame (10);
- a containment structure (22) which surrounds said external surface (11) of said frame (10) and contains said ring bodies (21a, 21b, 21c), said ring bodies (21a, 21b, 21c) being arranged between said external surface (11) and said containment structure (22), and wherein said containment structure (22) is associated with each of said plurality of ring bodies (21a, 21b, 21c) in a tangent manner, and
wherein said protection assembly (20) further comprises fastening means for fastening each of said plurality of ring bodies (21a, 21b, 21c) to said containment structure (22) and for fastening each of said plurality of ring bodies (21a, 21b, 21c) to said frame (10),
wherein each of said plurality of ring bodies (21a, 21b, 21c) (21a, 21b, 21c) is configured to be subjected to deformation in the event of an impact,
wherein the frame has a front zone (10a), a rear zone (10b) and two side zones (10c), and wherein said plurality of ring bodies (21a, 21b, 21c) are arranged in said front zone (10a) and/or in said rear zone (10b) of the frame and/or in at least one of said side zones (10c) and wherein said containment structure (22) is a continuous body that wraps said frame (10) along said front zone (10a), said rear zone (10b) and said two side zones (10c).

2. Go-kart (100) according to the preceding claim, wherein each of said plurality of ring bodies (21a, 21b, 21c) is configured to be able to assume a rest condition and a deformed condition, and wherein each of said plurality of ring bodies (21a, 21b, 21c) is configured to be subjected to a temporary deformation and assume said deformed condition in the event of an impact, and is configured to assume said initial or rest condition in a condition of absence of impact or collision.

3. Go-kart (100) according to one of the preceding claims, wherein each of said plurality of ring bodies (21a, 21b, 21c) is shaped like a hollow cylinder or tubular body comprising two hollow base surfaces and a side surface, and wherein each of said plurality of ring bodies (21a, 21b, 21c) is associated with said frame (10) and with said containment structure (22) along said side surface.

4. Go-kart (100) according to the preceding claim, wherein said protection assembly (20) includes five ring bodies (21a) arranged along said front zone (10a) of said frame (10) and three ring bodies (21b) arranged along said rear zone (10b) of said frame (10).

5. Go-kart (100) according to the preceding claim, wherein said protection assembly further comprises a ring body (21c) arranged along one of said side zones (10c) of said frame (10) and a ring body (21c) arranged along the other of said side zones (10c) of said frame (10).

6. Go-kart (100) according to one of the preceding claims, wherein each of said plurality of ring bodies (21a, 21b, 21c) is made of elastic material.

7. Go-kart (100) according to one of the preceding claims, wherein said containment structure (22) is a continuous structure without hinges.

8. Go-kart (100) according to one of the preceding claims, wherein said ring bodies (21a, 21b, 21c) are the only connection between said containment structure (22) and said frame (10).

9. Go-kart (100) according to one of the preceding claims, wherein the external diameter of each of said plurality of ring bodies (21a, 21b, 21c) corresponds to or is equal to the distance between said containment structure (22) and said frame (10) in correspondence of said each of said plurality of ring bodies (21a, 21b, 21c).

10. Go-kart (100) according to one of the preceding claims, wherein said fastening means are configured to fasten each of said plurality of ring bodies (21a, 21b, 21c) to said containment structure (22) and to said frame (10) by tightening.

11. Impact protection method for a go-kart (100) comprising a frame (10) having an external impact surface (11) adapted to face an impact, wherein said method involves the following steps:
- providing a protection assembly (20) configured to protect said frame (10), wherein the protection assembly (20) includes at least one ring body (21a, 21b, 21c), arranged along the external surface (11) of said frame (10), and a containment structure (22), which surrounds said external surface (11), wherein said at least one ring body (21a, 21b, 21c) is arranged between said external surface (11) and said containment structure (22),
- a temporary deformation of said at least one ring body (21a, 21b, 21c) in the event of an impact in such a way as to at least partially absorb an impact energy,
- a springback of said at least one ring body (21a, 21b, 21c) at the end of the impact,
and wherein said protection assembly (20) comprises a plurality of ring bodies (21a, 21b, 21c) and wherein said containment structure (22) is a continuous body which wraps said frame (10) and is associated with each of said plurality of ring bodies (21a, 21b, 21c) in a tangent manner.

12. Method according to the preceding claim, wherein each of said plurality of ring bodies (21a, 21b, 21c) is configured to be able to assume a rest condition and a deformed condition, wherein during said temporary deformation each of said plurality of ring bodies ring (21a, 21b, 21c) assumes said deformed condition and wherein before said temporary deformation and following said springback each of said plurality of ring bodies (21a, 21b, 21c) assumes said rest condition.

## Patentansprüche

1. Gokart (100), umfassend einen Rahmen (10), der eine äußere Aufpralloberfläche (11) aufweist, die angepasst ist, um einem Aufprall gegenüberzustehen, und eine Schutzanordnung (20) zum Schützen des Rahmens (10), wobei die Schutzanordnung umfasst:
- eine Vielzahl von Ringkörpern (21a, 21b, 21c) (21a, 21b, 21c), die entlang der äußeren Oberfläche (11) des Rahmens (10) eingerichtet sind;
- eine Einschlussstruktur (22), die die äußere Oberfläche (11) des Rahmens (10) umgibt und die Ringkörper (21a, 21b, 21c) einschließt, wobei die Ringkörper (21a, 21b, 21c) zwischen der äußeren Oberfläche (11) und der Einschlussstruktur (22) eingerichtet sind und wobei die Einschlussstruktur (22) mit jedem der Vielzahl von Ringkörpern (21a, 21b, 21c) auf eine tangentiale Art verknüpft ist und
wobei die Schutzanordnung (20) ferner Befestigungsmittel zum Befestigen jedes der Vielzahl von Ringkörpern (21a, 21b, 21c) an der Einschlussstruktur (22) und zum Befestigen jedes der Vielzahl von Ringkörpern (21a, 21b, 21c) an dem Rahmen (10) umfasst,
wobei jeder der Vielzahl von Ringkörpern (21a, 21b, 21c) (21a, 21b, 21c) konfiguriert ist, um in dem Fall eines Aufpralls einer Verformung unterworfen zu werden,
wobei der Rahmen eine vordere Zone (10a), eine hintere Zone (10b) und zwei Seitenzonen (10c) aufweist und wobei die Vielzahl von Ringkörpern (21a, 21b, 21c) in der vorderen Zone (10a) und/oder in der hinteren Zone (10b) des Rahmens und/oder in mindestens einer der Seitenzonen (10c) eingerichtet sind und wobei die Einschlussstruktur (22) ein durchgehender Körper ist, der den Rahmen (10) entlang der vorderen Zone (10a), der hinteren Zone (10b) und der zwei Seitenzonen (10c) umhüllt.

2. Gokart (100) nach dem vorstehenden Anspruch, wobei jeder der Vielzahl von Ringkörpern (21a, 21b, 21c) konfiguriert ist, um in der Lage zu sein, einen Ruhezustand und einen verformten Zustand einzunehmen, und wobei jeder der Vielzahl von Ringkörpern (21a, 21b, 21c) konfiguriert ist, um in dem Fall eines Aufpralls einer vorübergehenden Verformung unterworfen zu werden und den verformten Zustand einzunehmen, und konfiguriert ist, um in einem Zustand ohne Aufprall oder Kollision den Ausgangs- oder Ruhezustand einzunehmen.

3. Gokart (100) nach einem der vorstehenden Ansprüche, wobei jeder der Vielzahl von Ringkörpern (21a, 21b, 21c) wie ein hohler Zylinder oder röhrenförmiger Körper, umfassend zwei hohle Basisoberflächen und eine Seitenoberfläche, gestaltet ist und wobei jeder der Vielzahl von Ringkörpern (21a, 21b, 21c) mit dem Rahmen (10) und der Einschlussstruktur (22) entlang der Seitenoberfläche verknüpft ist.

4. Gokart (100) nach dem vorstehenden Anspruch, wobei die Schutzanordnung (20) fünf Ringkörper (21a), die entlang der vorderen Zone (10a) des Rahmens (10) eingerichtet sind, und drei Ringkörper (21b), die entlang der hinteren Zone (10b) des Rahmens (10) eingerichtet sind, einschließt.

5. Gokart (100) nach dem vorstehenden Anspruch, wobei die Schutzanordnung ferner einen Ringkörper (21c), der entlang einer der Seitenzonen (10c) des Rahmens (10) eingerichtet ist, und einen Ringkörper (21c), der entlang der anderen der Seitenzonen (10c) des Rahmens (10) eingerichtet ist, umfasst.

6. Gokart (100) nach einem der vorstehenden Ansprüche, wobei jeder der Vielzahl von Ringkörpern (21a, 21b, 21c) aus elastischem Material hergestellt ist.

7. Gokart (100) nach einem der vorstehenden Ansprüche, wobei die Einschlussstruktur (22) eine durchgehende Struktur ohne Scharniere ist.

8. Gokart (100) nach einem der vorstehenden Ansprüche, wobei die Ringkörper (21a, 21b, 21c) die einzige Verbindung zwischen der Einschlussstruktur (22) und dem Rahmen (10) sind.

9. Gokart (100) nach einem der vorstehenden Ansprüche, wobei der äußere Durchmesser jedes der Vielzahl von Ringkörpern (21a, 21b, 21c) dem Abstand zwischen der Einschlussstruktur (22) und dem Rahmen (10) in Entsprechung zu jedem der Vielzahl von Ringkörpern (21a, 21b, 21c) entspricht oder diesem gleich ist.

10. Gokart (100) nach einem der vorstehenden Ansprüche, wobei die Befestigungsmittel konfiguriert sind, um jeden der Vielzahl von Ringkörpern (21a, 21b, 21c) durch Festziehen an der Einschlussstruktur (22) und an dem Rahmen (10) zu befestigen.

11. Aufprallschutzverfahren für ein Gokart (100), umfassend einen Rahmen (10), der eine äußere Aufpralloberfläche (11) aufweist, die angepasst ist, um einem Aufprall gegenüberzustehen, wobei das Verfahren die folgenden Schritte beinhaltet:
- Bereitstellen einer Schutzanordnung (20), die konfiguriert ist, um den Rahmen (10) zu schützen, wobei die Schutzanordnung (20) mindestens einen Ringkörper (21a, 21b, 21c), der entlang der äußeren Oberfläche (11) des Rahmens (10) eingerichtet ist, und eine Einschlussstruktur (22), die die äußere Oberfläche (11) umgibt, einschließt, wobei der mindestens eine Ringkörper (21a, 21b, 21c) zwischen der äußeren Oberfläche (11) und der Einschlussstruktur (22) eingerichtet ist,
- ein vorübergehendes Verformen des mindestens einen Ringkörpers (21a, 21b, 21c) in dem Fall eines Aufpralls in einer derartigen Weise, um eine Aufprallenergie mindestens teilweise zu absorbieren,
- ein Rückfedern des mindestens einen Ringkörpers (21a, 21b, 21c) an dem Ende des Aufpralls,
und wobei die Schutzanordnung (20) eine Vielzahl von Ringkörpern (21a, 21b, 21c) umfasst und wobei die Einschlussstruktur (22) ein durchgehender Körper ist, der den Rahmen (10) umhüllt und mit jedem der Vielzahl von Ringkörpern (21a, 21b, 21c) auf eine tangentiale Art verknüpft ist.

12. Verfahren nach dem vorstehenden Anspruch, wobei jeder der Vielzahl von Ringkörpern (21a, 21b, 21c) konfiguriert ist, um in der Lage zu sein, einen Ruhezustand und einen verformten Zustand einzunehmen, wobei während des vorübergehenden Verformens jeder der Vielzahl von Ringkörpern (21a, 21b, 21c) den verformten Zustand einnimmt und wobei vor dem vorübergehenden Verformen und nach dem Rückfedern jeder der Vielzahl von Ringkörpern (21a, 21b, 21c) den Ruhezustand einnimmt.

## Revendications

1. Kart (100) comprenant un cadre (10) ayant une surface d'impact externe (11) adaptée pour faire face à un impact et un ensemble de protection (20) pour protéger ledit cadre (10), dans lequel l'ensemble de protection comprend :
- une pluralité de corps annulaires (21a, 21b, 21c) (21a, 21b, 21c) disposés le long de la surface externe (11) dudit cadre (10) ;
- une structure de confinement (22) qui entoure ladite surface externe (11) dudit cadre (10) et contient lesdits corps annulaires (21a, 21b, 21c), lesdits corps annulaires (21a, 21b, 21c) étant disposés entre ladite surface externe (11) et ladite structure de confinement (22), et dans lequel ladite structure de confinement (22) est associée à chacun de ladite pluralité de corps annulaires (21a, 21b, 21c) d'une manière tangente, et
dans lequel ledit ensemble de protection (20) comprend en outre des moyens de fixation pour fixer chacun de ladite pluralité de corps annulaires (21a, 21b, 21c) à ladite structure de confinement (22) et pour fixer chacun de ladite pluralité de corps annulaires (21a, 21b, 21c) audit cadre (10),
dans lequel chacun de ladite pluralité de corps annulaires (21a, 21b, 21c) (21a, 21b, 21c) est configuré pour être soumis à une déformation en cas d'impact,
dans lequel le cadre a une zone avant (10a), une zone arrière (10b) et deux zones latérales (10c), et dans lequel ladite pluralité de corps annulaires (21a, 21b, 21c) sont disposés dans ladite zone avant (10a) et/ou dans ladite zone arrière (10b) du cadre et/ou dans au moins une desdites zones latérales (10c) et dans lequel ladite structure de confinement (22) est un corps continu qui enveloppe ledit cadre (10) le long de ladite zone avant (10a), de ladite zone arrière (10b) et desdites deux zones latérales (10c).

2. Kart (100) selon la revendication précédente, dans lequel chacun de ladite pluralité de corps annulaires (21a, 21b, 21c) est configuré pour pouvoir prendre un état de repos et un état déformé, et dans lequel chacun de ladite pluralité de corps annulaires (21a, 21b, 21c) est configuré pour être soumis à une déformation temporaire et prendre cet état déformé en cas d'impact, et est configuré pour prendre cet état initial ou de repos en l'absence d'impact ou de collision.

3. Kart (100) selon l'une des revendications précédentes, dans lequel chacun de ladite pluralité de corps annulaires (21a, 21b, 21c) a la forme d'un cylindre creux ou d'un corps tubulaire comprenant deux surfaces de base creuses et une surface latérale, et dans lequel chacun de ladite pluralité de corps annulaires (21a, 21b, 21c) est associé audit cadre (10) et à ladite structure de confinement (22) le long de ladite surface latérale.

4. Kart (100) selon la revendication précédente, dans lequel ledit ensemble de protection (20) comporte cinq corps annulaires (21a) disposés le long de ladite zone avant (10a) dudit cadre (10) et trois corps annulaires (21b) disposés le long de ladite zone arrière (10b) dudit cadre (10).

5. Kart (100) selon la revendication précédente, dans lequel ledit ensemble de protection comprend en outre un corps annulaire (21c) disposé le long d'une desdites zones latérales (10c) dudit cadre (10) et un corps annulaire (21c) disposé le long de l'autre desdites zones latérales (10c) dudit cadre (10).

6. Kart (100) selon l'une des revendications précédentes, dans lequel chacun de ladite pluralité de corps annulaires (21a, 21b, 21c) est constitué d'un matériau élastique.

7. Kart (100) selon l'une des revendications précédentes, dans lequel ladite structure de confinement (22) est une structure continue sans charnières.

8. Kart (100) selon l'une des revendications précédentes, dans lequel lesdits corps annulaires (21a, 21b, 21c) constituent la seule liaison entre ladite structure de confinement (22) et ledit cadre (10).

9. Kart (100) selon l'une des revendications précédentes, dans lequel le diamètre extérieur de chacun de ladite pluralité de corps annulaires (21a, 21b, 21c) correspond ou est égal à la distance entre ladite structure de confinement (22) et ledit cadre (10) en correspondance avec ledit chacun de ladite pluralité de corps annulaires (21a, 21b, 21c).

10. Kart (100) selon l'une des revendications précédentes, dans lequel lesdits moyens de fixation sont configurés pour fixer chacun de ladite pluralité de corps annulaires (21a, 21b, 21c) à ladite structure de confinement (22) et audit cadre (10) par serrage.

11. Procédé de protection contre les impacts pour un kart (100) comprenant un cadre (10) ayant une surface d'impact externe (11) adaptée pour faire face à un impact, dans lequel ledit procédé comprend les étapes suivantes :
- la fourniture d'un ensemble de protection (20) configuré pour protéger ledit cadre (10), dans lequel l'ensemble de protection (20) comporte au moins un corps annulaire (21a, 21b, 21c), disposé le long de la surface externe (11) dudit cadre (10), et une structure de confinement (22), qui entoure ladite surface externe (11), dans lequel ledit au moins un corps annulaire (21a, 21b, 21c) est disposé entre ladite surface externe (11) et ladite structure de confinement (22),
- une déformation temporaire dudit au moins un corps annulaire (21a, 21b, 21c) en cas d'impact de manière à absorber au moins partiellement une énergie d'impact,
- un retour élastique dudit au moins un corps annulaire (21a, 21b, 21c) à la fin de l'impact,
et dans lequel ledit ensemble de protection (20) comprend une pluralité de corps annulaires (21a, 21b, 21c) et dans lequel ladite structure de confinement (22) est un corps continu qui enveloppe ledit cadre (10) et est associé à chacun de ladite pluralité de corps annulaires (21a, 21b, 21c) d'une manière tangente.

12. Procédé selon la revendication précédente, dans lequel chacun de ladite pluralité de corps annulaires (21a, 21b, 21c) est configuré pour pouvoir prendre un état de repos et un état déformé, dans lequel pendant ladite déformation temporaire chacun de ladite pluralité de corps annulaires (21a, 21b, 21c) prend cet état déformé et dans lequel avant ladite déformation temporaire et après ledit retour élastique chacun de ladite pluralité de corps annulaires (21a, 21b, 21c) prend cet état de repos.
